# EUROPEAN PATENT APPLICATION

(11) **EP 4 815 614 A1**
(43) Date of publication of application: **30.09.2026**
(21) Application number: 24909827.8
(22) Date of filing: 13.08.2024
(51) Int. Cl.: H04W 76/10, H04W 24/02, H04W 28/10

(54) **DATA TRANSMISSION METHOD AND APPARATUS**

(30) Priority: 29.12.2023 CN 202311867812
(71) Applicant: Honor Device Co., Ltd., Shenzhen, Guangdong 518040 (CN)
(72) Inventor: PANG, Gaokun, Shenzhen, Guangdong 518040 (CN)
(74) Representative: MERH-IP Matias Erny Reichl Hoffmann Patentanwälte PartG mbB
(86) International application number: PCT/CN2024/111848
(87) International publication number: WO 2025/138876

(57) **Abstract**

This application provides a data communication method and apparatus, and relates to the field of communication technologies. According to application information of an application running in a terminal device, network slice information corresponding to the application can be matched, helping to satisfy differentiated service requirements and improve the utilization rate of network resources. The method includes: determining, when a first application runs, first network slice information corresponding to the first application by using a second application; and transmitting, by using a protocol data unit PDU session activated through the first network slice information, a data flow generated by running the first application.

## Description

This application claims priority to Chinese Patent Application No. 202311867812.1, entitled "DATA TRANSMISSION METHOD AND APPARATUS" filed with the China National Intellectual Property Administration on December 29, 2023, which is incorporated herein by reference in its entirety.

### TECHNICAL FIELD

This application relates to the field of communication technologies, and in particular, to a data transmission method and apparatus.

### BACKGROUND

The types of terminal devices and services provided by the terminal devices are increasing. If different types of services are served by the same network, it will be difficult to meet diversified service requirements of the terminal devices. Therefore, providing differentiated network services for different services through a network slicing technology has become one of the important approaches to improve network quality at present.

Network slicing is an on-demand networking mode, which enables operators to slice a plurality of virtual end-to-end networks on a unified infrastructure. Each network slice is logically isolated from a radio access network to a bearer network and then to a core network, and is adapted to various types of service applications. However, currently, a terminal device may not be able to determine a network slice matched with an application running in the terminal device, so that the network slice cannot serve a service of the application, causing poor user experience.

### SUMMARY

This application provides a data transmission method and apparatus. According to application information of an application running in a terminal device, network slice information corresponding to the application can be matched, helping to satisfy differentiated service requirements, thereby improving user experience.

According to a first aspect, a data transmission method is provided, including: determining, when a first application runs, first network slice information corresponding to the first application by using a second application; and transmitting, by using a protocol data unit PDU session activated through the first network slice information, a data flow generated by running the first application.

According to the data transmission method of this application, the terminal device may use the second application to match the first network slice information corresponding to the first application, and may use, for different applications running in the terminal device, a PDU session corresponding to each application to transmit a data flow generated by running each application, so that differentiated requirements for different applications can be satisfied, helping to improve the utilization rate of network resources, thereby improving user experience.

It should be understood that when the first application runs, the first application may be launched. To be specific, when the first application is launched, the terminal device determines the first network slice information. The first network slice information may be understood as a parameter for describing a parameter required by the terminal device for activating a PDU session corresponding to the first network slice or a parameter for describing an attribute of the PDU session corresponding to the first network slice information.

With reference to the first aspect, in some implementations of the first aspect, the determining first network slice information corresponding to the first application by using a second application includes: obtaining application information of the first application by using the second application; and querying, based on the application information, a user equipment route selection policy URSP for the first network slice information corresponding to the application information.

The URSP may include a corresponding relationship between the application information and the first network slice information. In this way, when the second application may obtain the application information, the first network slice information may be determined by using the URSP, helping the terminal device to successfully match the first network slice information corresponding to the first application.

With reference to the first aspect, in some implementations of the first aspect, the querying, based on the application information, a user equipment route selection policy URSP for the first network slice information corresponding to the application information includes: transmitting the application information to an information management module of an operating system by using the second application; transmitting the application information to a modem(Modem) by using the information management module; and querying, by using the Modem based on the application information, the URSP for the first network slice information corresponding to the application information, where the URSP includes a corresponding relationship between the application information and the first network slice information. In this way, the Modem may determine the first network slice information by using the application information and the URSP, and the terminal device does not need to convert the application information.

With reference to the first aspect, in some implementations of the first aspect, the transmitting the application information to an information management module by using the second application includes: calling, by using the second application, a first interface to transmit the application information to the information management module. The first interface may be configured to transmit application information or a TD parameter. The second application may transmit the application information or the TD parameter to the information management module by using the first interface, so that the Modem can match the network slice information for the first application based on the application information or the TD parameter from the information management module.

With reference to the first aspect, in some implementations of the first aspect, the information management module transmits the application information to the Modem by using a network request function. In this way, the success rate of transmitting the application information to the Modem is improved.

With reference to the first aspect, in some implementations of the first aspect, the querying, based on the application information, a user equipment route selection policy URSP for the first network slice information corresponding to the application information includes: replacing the application information with a traffic descriptor TD parameter by using the second application based on a preset corresponding relationship, where the preset corresponding relationship includes a corresponding relationship between the application information and the TD parameter; transmitting the TD parameter to the information management module by using the second application; transmitting the TD parameter to the modem (Modem) by using the information management module; and querying, by using the Modem based on the TD parameter, the URSP for the first network slice information corresponding to the application information, where the URSP includes a corresponding relationship between the TD parameter and the first network slice information. In this way, the URSP does not need to be modified, helping the terminal device to successfully match the first network slice information by using the TD parameter.

With reference to the first aspect, in some implementations of the first aspect, the method further includes: transmitting first information to the information management module by using the Modem, where the first information is configured for indicating that the first application is successfully matched with the first network slice information, and the first information includes information for indicating the first application; transmitting, by using the information management module, the first information to the second application; and calling, by using the second application, a second interface to bind a routing relationship of the first application, where the routing relationship is a relationship between the first application and the PDU session. In this way, the second application may determine whether the first application is matched with network slice information successfully, so that the second application is bound to the routing relationship of the first application, and the data flow generated by running the first application may be routed, by using the routing relationship, to the PDU session corresponding to the first network slice information. Then, the terminal device transmits the data flow of the first application by using the PDU session.

With reference to the first aspect, in some implementations of the first aspect, the transmitting, by using a protocol data unit PDU session activated through the first network slice information, a data flow generated by running the first application includes: sending, to the core network device by using the Modem, a PDU session establishment request for activating the PDU session, where the PDU session establishment request carries the first network slice information; receiving a PDU session establishment response from the core network device, where the PDU session establishment response is configured for representing a successful activation of the PDU session; and transmitting the data flow by using the Modem through the PDU session. In this way, the PDU session corresponding to the first network slice information may be established, and the terminal device may use the PDU session to transmit the data flow generated by running the first application and transmit the data flow generated by running the first application, thereby helping to satisfy differentiated service requirements.

With reference to the first aspect, in some implementations of the first aspect, the URSP is preset, obtained from a core network device, or generated through an attention AT command.

With reference to the first aspect, in some implementations of the first aspect, before the obtaining application information of the first application by using the second application, the method further includes: obtaining a system permission from the information management module by using the second application, where the system permission is a permission for the second application to obtain the application information. The system permission may alternatively be understood as a permission for the second application to register a listener with the activity management module for a launch process of an application and a permission for the second application to obtain application information of the launched application. In this way, the second application may successfully obtain the application information of the launched first application. Therefore, it is convenient for the terminal device to match the network slice information of the first application by using the application information.

With reference to the first aspect, in some implementations of the first aspect, the obtaining a system permission from the information management module by using the second application includes: sending a first request to the information management module by using the second application, where the first request is configured for obtaining the system permission, and the first request carries a signature of the second application; determining, by using the information management module through the signature, whether the second application belongs to a whitelist; and obtaining, by the second application, the system permission if the second application belongs to the whitelist. The signature may be configured for determining information such as a source and a developer of the second application.

With reference to the first aspect, in some implementations of the first aspect, the second application is a first SDK application, and/or the application information includes one or more of the following: an application number identifier ID, a package name, or a data network name DNN.

According to a second aspect, a data transmission apparatus is provided, for performing the method in any of possible implementations in the first aspect. Specifically, the apparatus includes a module for performing the method in any of possible implementations in the first aspect.

According to a third aspect, this application provides another data transmission apparatus, including a processor. The processor is coupled to a memory, and may be configured to execute instructions in the memory, to implement the method in any of possible implementations in the first aspect. Optionally, the apparatus further includes the memory. Optionally, the apparatus further includes a communication interface, and the processor is coupled to the communication interface.

In an implementation, the apparatus is a terminal device. When the apparatus is the terminal device, the communication interface may be a transceiver or an input/output interface.

In another implementation, the apparatus is a chip configured in the terminal device. When the apparatus is the chip configured in the terminal device, the communication interface may be the input/output interface.

According to a fourth aspect, a processor is provided, including: an input circuit, an output circuit, and a processing circuit. The processing circuit is configured to receive a signal through the input circuit and transmit a signal through the output circuit, so that the processor performs the method in any of possible implementations in the first aspect.

In a specific implementation process, the processor may be a chip. The input circuit may be an input pin. The output circuit may be an output pin. The processing circuit may be a transistor, a gate circuit, a flip-flop, various logic circuits, etc. An input signal received by the input circuit may be received and input by, for example, a receiver, a signal output by the output circuit may be output to, for example, a transmitter and transmitted by the transmitter, and the input circuit and the output circuit may be a same circuit, where the circuit is separately used as the input circuit and the output circuit at different moments. Specific implementations of the processor and various circuits are not limited in this embodiment of this application.

According to a fifth aspect, a processing apparatus is provided, including a processor and a memory. The processor is configured to read instructions stored in the memory, and may receive a signal by using a receiver and transmit a signal by using a transmitter, to perform the method in any possible implementation in the first aspect.

Optionally, there are one or more processors, and there are one or more memories.

Optionally, the memory may be integrated with the processor, or the memory and the processor may be separately disposed.

In a specific implementation process, the memory may be a non-transitory (non-transitory) memory, such as a read only memory (read only memory, ROM). The memory and the processor may be integrated on the same chip, or may be disposed on different chips respectively. A type of the memory and a manner of disposing the memory and the processor are not limited in embodiments of this application.

It should be understood that for a related data interaction process, for example, sending indication information may be a process of outputting indication information from the processor, and receiving capability information may be a process of receiving and inputting capability information by the processor. Specifically, data that is processed and outputted may be outputted to the transmitter, and inputted data received by the processor may be from the receiver. The transmitter and the receiver may be collectively referred to as a transceiver.

The processing apparatus in the fifth aspect may be a chip, and the processor may be implemented through hardware or software. When the processor is implemented through hardware, the processor may be a logic circuit, an integrated circuit, etc. When the processor is implemented through software, the processor may be a general-purpose processor and be implemented by reading software code stored in the memory. The memory may be integrated in the processor, or may be located out of the processor and independently exist.

According to a sixth aspect, a computer program product is provided. The computer program product includes a computer program (which may alternatively be referred to as code or instructions). When the computer program is run, a computer is caused to perform the method in any of possible implementations in the first aspect.

According to a seventh aspect, a computer-readable storage medium is provided. The computer-readable storage medium stores a computer program (which may alternatively be referred to as code or instructions). When the computer program runs on a computer, the computer is caused to perform the method in any of possible implementations in the first aspect.

### BRIEF DESCRIPTION OF DRAWINGS

FIG. 1 is a schematic diagram of a communication system to which an embodiment of this application is applicable;
FIG. 2 is a schematic diagram of a scenario to which a method is applicable according to an embodiment of this application;
FIG. 3 is a schematic diagram of a software architecture of a terminal device according to an embodiment of this application;
FIG. 4 is a schematic flowchart of a data transmission method according to an embodiment of this application;
FIG. 5 is a schematic flowchart of a method for matching a network slice with a terminal device according to an embodiment of this application;
FIG. 6 is a schematic block diagram of a data transmission apparatus according to an embodiment of this application;
FIG. 7 is a schematic block diagram of another data transmission apparatus according to an embodiment of this application; and
FIG. 8 is a schematic block diagram of a hardware structure of a terminal device according to an embodiment of this application.

### DESCRIPTION OF EMBODIMENTS

The following describes technical solutions of this application with reference to the accompanying drawings.

In some embodiments provided by this application, terms such as "first" and "second" are used to distinguish between the same items or similar items that have basically the same functions and roles. For example, a first value and a second value are merely used to distinguish between different values, and are not intended to limit a sequence thereof. A person skilled in the art may understand that the terms such as "first" and "second" do not limit a quantity or an execution order, and the terms such as "first" and "second" do not necessarily indicate a specific difference.

It should be noted that in embodiments of this application, terms such as "by way of example" or "for example" are used to represent giving an example, an illustration, or a description. Any embodiment or design scheme described as "by way of example" or "for example" in this application should not be explained as being more preferred or having more advantages than another embodiment or design scheme. Exactly, the terms such as "by way of example" or "for example" are used to present a related concept in a specific manner.

In embodiments of this application, "at least one" means one or more, and "a plurality of" means two or more. The term "and/or" describes an association relationship between associated objects and represents that three relationships may exist. For example, A and/or B may represent that: only A exists, both A and B exist, and only B exists, where A and B may be singular or plural. The character " generally represents an "or" relationship between the associated objects. "At least one of the following" or a similar expression thereof refers to any combination of these items, including one item or any combination of a plurality of items. For example, at least one of a, b, or c may represent a, b, c, a-b, a--c, b-c, or a-b-c, where a, b, and c may be singular or plural.

The technical solutions of embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, or a new radio (new radio, NR) system, and a future evolved communication system, such as a 6th generation (6th generation, 6G) system.

The terminal device in the embodiments of this application may alternatively be referred to as user equipment (user equipment, UE), a mobile station (mobile station, MS), a mobile terminal (mobile terminal, MT), an access terminal, a user unit, a user station, a mobile site, the mobile station, a remote station, a remote terminal, a mobile device, a user terminal, a terminal, a wireless communication device, a user agent, or a user apparatus.

An access network device and a core network device in embodiments of this application may be collectively referred to as network devices.

The core network device in embodiments of this application may be a core network device in a 5G system, such as an access and mobility management function (access and mobility management function, AMF) network element, a policy control function (policy control function, PCF) network element, etc., and may alternatively be a core network device with another name. This is not limited in embodiments of this application.

The access network device may be any device with a wireless transceiver function. The access network device includes, but is not limited to: an evolved Node B (evolved Node B, eNB), a radio network controller (radio network controller, RNC), Node B (Node B, NB), a base station controller (base station controller, BSC), a base transceiver station (base transceiver station, BTS), a home base station (e.g., home evolved NodeB or home Node B, HNB), a baseband unit (baseband unit, BBU), an access point (access point, AP) in a wireless fidelity (wireless fidelity, WiFi) system, a wireless relay node, a wireless backhaul node, a transmission point (transmission point, TP) or a transmission and reception point (transmission and reception point, TRP), etc., may alternatively be a 5G base station (next-Generation Node B, gNB) in a 5G (e.g., NR) system, or a transmission point (TRP or TP), one or a group of antenna panels (including a plurality of antenna panels) of a base station in a 5G system, or a network node constituting a gNB or a transmission point, such as a baseband unit (BBU) or a distributed unit (distributed unit, DU), etc.

In some deployments, the gNB may include a centralized unit (centralized unit, CU) and the DU. The gNB may further include an active antenna unit (active antenna unit, AAU). The CU implements part of the functions of the gNB, and the DU implements part of the functions of the gNB. For example, the CU may be responsible for processing non-real-time protocols and services, such as implementing the functions of a radio resource control (radio resource control, RRC) layer, a service data adaptation protocol (service data adaptation protocol, SDAP) layer, and/or a packet data convergence protocol (packet data convergence protocol, PDCP) layer. The DU may be responsible for processing physical layer protocols and real-time services, for example, implementing the functions of a radio link control (radio link control, RLC) layer, a media access control (media access control, MAC) layer, and a physical (PHY) layer. A single DU may be connected to only one CU or a plurality of CUs, while a single CU may be connected to a plurality of Dus. The communication between the CU and the DU may be performed through an F1 interface. The AAU may implement some physical layer processing functions, radio frequency processing, and a function related to an active antenna. Since information at the RRC layer eventually becomes information at the PHY layer, or is converted from information at the PHY layer, in this architecture, higher layer signaling, for example, RRC layer signaling, may alternatively be considered as being sent by the DU, or sent by the DU and the AAU.

It may be understood that the access network device may be a device including one or more of a CU node, a DU node, and an AAU node. In addition, the CU may be classified as an access network device in a radio access network (radio access network, RAN), or the CU may be classified as an access network device in a core network (core network, CN). This is not limited in this application.

The access network device provides a service for a cell, and the terminal device communicates with the cell by using a transmission resource (e.g., a frequency domain resource or a spectrum resource) allocated by the access network device. The cell may belong to a macro base station (e.g., macro eNB or macro gNB), or may belong to a base station corresponding to a small cell (small cell). The small cell herein may include: a metro cell (metro cell), a micro cell (micro cell), a pico cell (pico cell), a femto cell (femto cell), and the like. These small cells have features of small coverage and low transmit power, and are suitable for providing high-speed data transmission services.

The following describes some technical terms involved in this application.
1. Network slicing (network slicing) is an on-demand networking mode, which enables operators to slice a plurality of virtual end-to-end networks on a unified infrastructure. Each network slice is logically isolated from a radio access network to a bearer network and then to a core network, and is adapted to various types of service applications. A network slice may include a radio sub-slice, a bearer sub-slice, and a core network sub-slice. The network slice may alternatively be understood as a logical network formed by combining related service functions, network resources, and network configurations in a physical network.
2. Network slice selection assistance information (network slice selection assistance information, NSSAI) may be information for identifying network slices. For example, the NSSAI may include information for indicating a slice/service type (slice/service type, SST) and/or information for indicating a slice differentiator (slice differentiator, SD), etc.
3. A UE route selection policy (UE route selection policy, URSP) refers to information describing a corresponding relationship between an application and a network slice. The URSP may include one or more pieces of single network slice selection assistance information (single network slice selection assistance information, S-NSSAI), etc., so as to implement differentiated control policies for different services of different users.

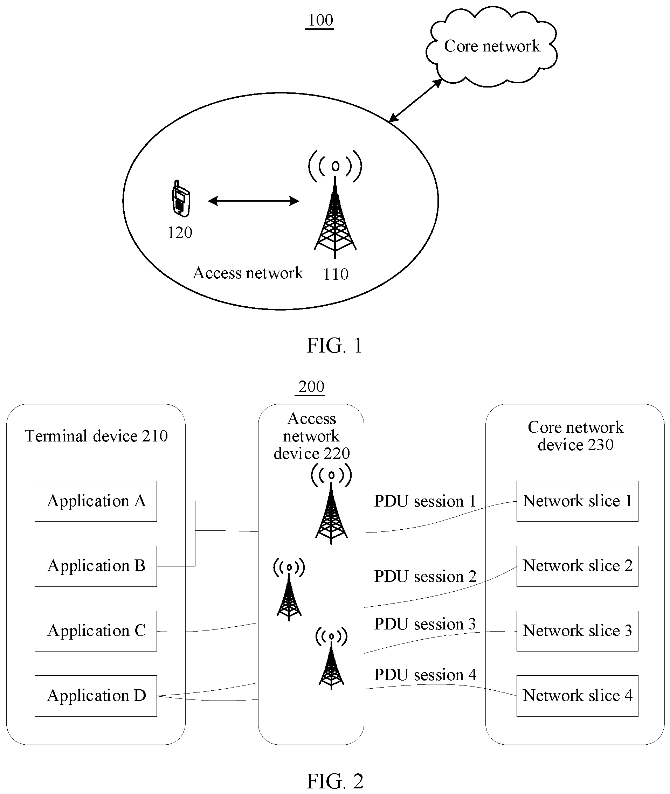

For ease of understanding of embodiments of this application, embodiments applicable to this application are first described in detail with reference to FIG. 1.

FIG. 1 shows a schematic diagram of a communication system 100 to which an embodiment of this application is applicable. The communication system 100 includes an access network and a core network.

The access network includes at least one access network device, such as an access network device 110 shown in FIG. 1. The access network further includes at least one terminal device, such as a terminal device 120 shown in FIG. 1. A core network device in the core network may be connected to the access network device in a wireless or wired manner. When the terminal device is within the coverage of the access network device, the terminal device may be connected to the access network device in a wireless manner. For example, when the terminal device 120 is within the coverage of the access network device 110, the terminal device 120 may be connected to the access network device 110 in a wireless manner.

The access network device 110 and the terminal device 120 may communicate with each other through a wireless link. The access network device 110 or the terminal device 120 may be configured with a plurality of antennas. The plurality of antennas may include at least one transmit antenna for sending a signal and at least one receive antenna for receiving a signal. In addition, the access network device 110 or the terminal device 120 further includes a transmitter chain and a receiver chain. A person of ordinary skill in the art may understand that both the transmitter chain and the receiver chain may include a plurality of components (e.g., a processor, a modulator, a multiplexer, a demodulator, a demultiplexer, or an antenna) related to signal sending and signal receiving. Therefore, the access network device 110 and the terminal device 120 may communicate with each other through a multi-antenna technology.

In addition, the access network device 110 may alternatively communicate with the core network device in the core network through a wireless link. Therefore, the terminal device 120 may communicate with the core network device through the access network device 110. By way of example, the terminal device 120 may send information 1 to the access network device 110, and correspondingly, the access network device 110 receives information 1 from the terminal device 120. The access network device 110 then sends information 1 to the core network device, and correspondingly, the core network device receives information 1 from the access network device 110. Alternatively, the core network device sends information 2 to the access network device 110, and correspondingly, the access network device 110 receives information 2 from the core network device. The access network device 110 then sends information 2 to the terminal device 120, and correspondingly, the terminal device 120 receives information 2 from the access network device 110.

The main functions of the core network are to provide user connection, user management, and service bearer, and to serve as a bearer network to provide an interface to an external network. The establishment of user connection includes functions such as mobility management (MM), call management (CM), switching/routing, and announcement recording (which completes the connection to intelligent network peripheral devices in combination with intelligent network services).

It should be understood that a core network of a 4G network is an evolved packet core (evolved packet core, EPC) network. The EPC network is a core network of a 4G mobile communication network. The network falls within the scope of the core network, has the traditional capabilities of mobile networks such as user subscription data storage, mobility management, and data switching, and can provide users with an ultra-high-speed Internet access experience. A core network of a 5G network is a 5G Core (abbreviated as 5GC). The 5GC uses general network function virtualization devices to replace dedicated communication devices of the 4G network.

It should be noted that a core network in a network architecture shown in FIG. 1 may be obtained by the convergence of the EPC and the 5GC. To be specific, the core network in the network architecture may include both network elements in the EPC and network elements in the 5GC. For example, the core network in the network architecture may include an access and mobility management function (access and mobility management function, AMF) network element, a policy control function (policy control function, PCF) network element, a mobility management entity (mobility management entity, MME) network element, a serving gate way (serving gate way, SGW) network element, a packet data network gate way (packet data network gate way, PGW) network element, a session management function (session management function, SMF) network element, a user plane function (user plane function, UPF) network element, a unified data management (unified data management, UDM) network element, and a home subscriber server (home subscriber server, HSS) network element, etc.

In some embodiments of this application, the core network in the network architecture may include a converged network element derived from the network elements in the EPC and the 5GC, such as SMF+PGW-C, UPF+PGW-U, or UDM+HSS. PGW-C is a control plane node of the PGW network element, and PGW-U is a user plane node of the PGW network element.

Each network element in the core network may alternatively be referred to as a functional entity, which may be a network element implemented on dedicated hardware, a software instance running on dedicated hardware, or an instance of virtualized functions on an appropriate platform.

It should be understood that the names of all network elements in this application are merely examples. In future communications, such as 6G, the network elements may be referred to by other names. Alternatively, in future communications, such as 6G, the network elements involved in this application may be replaced by other entities or devices with the same functions. This is not limited in this application. This is a unified explanation herein and will not be repeated hereinafter. Optionally, the network elements in embodiments of this application may be communication devices, or chips or chip systems used in the communication devices, etc. This is not limited in this application.

It should be understood that the core network in the network architecture shown in FIG. 1 may further include other devices, network elements, network entities, or network subsystems, such as a policy control function (policy control function, PCF) network element. This is not limited in this application. It should be noted that this application does not limit the distribution mode of the network elements in the core network. For the distribution mode, reference may be made to relevant technical documents. This is not elaborated in this application.

It should be understood that FIG. 1 is only a schematic diagram, and this application does not limit the specific architecture of the applicable system. The communication system 100 may further include other network devices, such as a wireless relay device and a wireless backhaul device, which are not shown in FIG. 1. Embodiments of this application do not limit the quantity and specific form of the core network device, the access network device, and the terminal device included in the communication system 100.

Optionally, the foregoing communication system 100 may further include other network entities such as a network controller and a mobility management entity. This is not limited in embodiments of this application.

Currently, the types of terminal devices and services provided by the terminal devices are increasing. For different types of services, if the same network is adopted to provide services, it will be difficult to meet diversified service requirements of the terminal devices. For example, for cloud game applications in the terminal devices, a server needs to send real-time audio and video streams to a client. The client needs to send control command streams to the server, and the server applies the received control commands from the client to a game. Therefore, the services of the cloud game applications have high requirements for network latency and bandwidth. For weather applications in the terminal devices, the latency requirement is usually much lower than that of the cloud game applications. As another example, for a virtual reality (virtual reality, VR) terminal device, high latency may cause motion sickness (motion sickness) in a user, and the latency requirement for this type of terminal device is usually within 20 ms.

Based on this, currently, a plurality of virtual end-to-end networks may be separated on a unified core network infrastructure by using a network slicing technology, where each virtual end-to-end network may be referred to as a network slice. Each network slice can meet specific service requirements, such as latency, jitter, packet loss rate, and bandwidth within specific ranges. Through network slicing, a communication system may provide different service bearing capabilities for different types of services of the terminal device, such as services of cloud game applications and weather applications, thereby meeting diversified requirements of different services of the terminal device. In this way, the flexibility and service adaptability of the network architecture can be improved.

Applicable scenarios of network slicing will be described below with reference to FIG. 2.

FIG. 2 is a schematic diagram of an application scenario of network slicing according to an embodiment of this application. As shown in FIG. 2, a scenario 200 includes a terminal device 210, an access network device 220, and a core network device 230. The terminal device 210 may communicate with the core network device 230 through the access network device 220.

A plurality of applications may run in the terminal device 210, such as application A, application B, application C, and application D shown in FIG. 2. The core network device 230 may provide a plurality of network slices, such as network slice 1, network slice 2, network slice 3, and network slice 4 shown in FIG. 2. The applications in the terminal device 210 may access different network slices, so that the network slices may serve the services of different applications.

By way of example, when the terminal device 210 runs an application, a protocol data unit (protocol data unit, PDU) session of a network slice corresponding to the application is first established by the access network device 220, and then service data is transmitted to the core network device 230 by using the PDU session.

It should be noted that one application may correspond to one or more network slices, and one network slice may correspond to one or more applications. Each network slice corresponds to one PDU session.

As shown in FIG. 2, application A and application B may be connected to network slice 1 through PDU session 1, so that network slice 1 serves the services of application A and application B. Application C may be connected to network slice 2 through PDU session 2, so that network slice 2 serves the service of application C. Application D may be connected to network slice 3 through PDU session 3 and also to network slice 4 through PDU session 4, so that network slice 3 and network slice 4 serves the service of Application D.

However, in a process of using a network slicing technology, the terminal device may not obtain application information of a running application, or may not obtain a TD parameter corresponding to an application. Consequently, a network slice cannot be matched for the application running in the terminal device by using the application information, the TD parameter, and a URSP of the running application. Consequently, user experience is relatively poor.

To resolve the foregoing technical problem, this application provides a data transmission method and apparatus. A terminal device may obtain, by using a second application in the terminal device, application information of a first application running in the terminal device. Based on the application information, a Modem in the terminal device determines, according to a URSP stored in the terminal device, a route selection descriptor matched with the first application. The route selection descriptor is information for indicating a network slice, i.e., network slice information. In this way, the terminal device and a core network device may activate, through signaling interaction, a PDU session corresponding to the network slice information, so that the terminal device may transmit, by using the dedicated PDU session, a data flow generated by running the first application. For different applications, the terminal device may transmit, by using a PDU session corresponding to each application, a data flow of the application, thereby satisfying differentiated requirements for different services, thereby helping to improve the utilization rate of network resources and improve user experience.

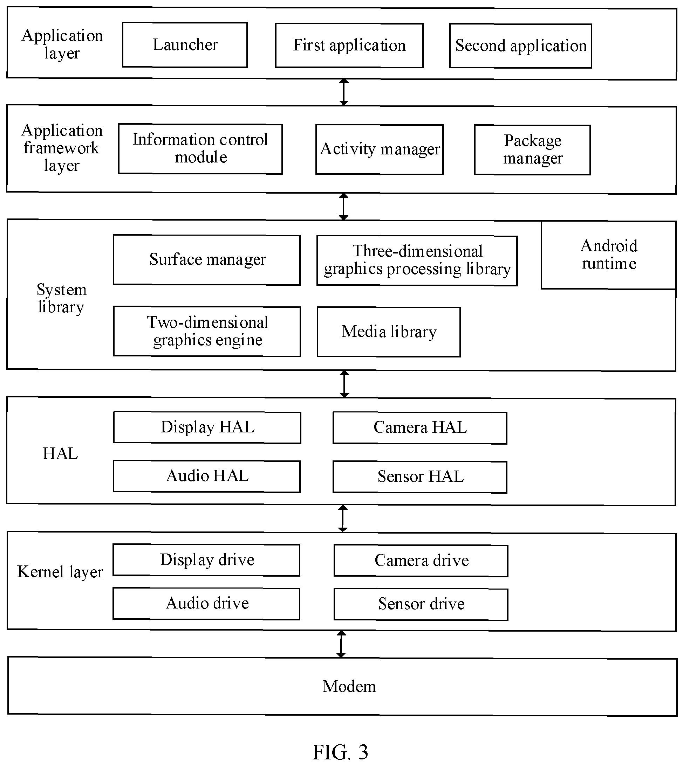

For ease of understanding, a software architecture of a terminal device involved in embodiments of this application is first described with reference to FIG. 3.

FIG. 3 is a block diagram of a software structure of a terminal device 300 according to an embodiment of this application.

A layered architecture divides software into several layers, where each layer has a clear role and responsibility. Communication between layers is implemented through software interfaces. Taking the Android system where the Android system runs on an AP as an example, in some embodiments, the Android system is divided into five layers. From top to bottom, the layers are respectively an application layer, an application framework (Framework) Layer, an Android runtime (Android runtime) and system libraries, a hardware abstraction layer (HAL), a system kernel layer (Kernel), and a Modem.

The application layer may include a series of application packages. The application packages may include a launcher (Launcher), a first application, a second application, and other APPs. The application layer may further include a systemUI (system UI), where the systemUI is configured to display an interface of a terminal, for example, displaying a signal icon corresponding to a SIM card, displaying a call interface, etc.

The launcher may be configured to manage applications displayed on a desktop of the terminal device 300, such as the first application.

The first application may be, for example, an application such as Camera, Gallery, Calendar, or Phone, or a third-party application such as a game application or a shopping application.

The second application may be an application developed by an operator, a terminal manufacturer, or a network device manufacturer. After obtaining a system permission, the second application may monitor a launch process of an application, and may obtain application information of the application launched by the terminal device 300 such as an application name from an activity manager and a package manager of the application framework layer. When the application running on the terminal device 300 is updated, the second application may update the name of the monitored application accordingly. When a signature of the second application is updated, the second application may be reinstalled, so that the second application obtains a system permission.

The second application may further obtain a corresponding relationship between application information and a TD parameter, so that the obtained application information of the application running on the terminal device 300 may be converted into the corresponding TD parameter. In addition, the second application may call a first interface to send the application information or the TD parameter to an information management module of the application framework layer, and may further call a second interface to bind a routing relationship of the first application. The first interface and the second interface may be application programming interfaces (Application Programming Interface, API) provided by the information management module.

The application framework layer provides APIs and programming frameworks for applications in the application layer. The application framework layer includes some predefined functions. For example, the application framework layer may include a window manager, a content provider, a view system, a telephony manager, an information management module, a package manager (package manager), an activity manager (activity manager), etc.

The information management module may grant a system permission to the second application, enabling the second application to obtain application information of the first application running on the terminal device 300 based on the system permission, and may further provide a first interface and a second interface.

The first interface may partially reuse Android interfaces. The application information or the TD parameter may be transmitted. When calling the first interface to transmit the application information or the TD parameter, one or more of the following types of information may be inputted to implement the functions corresponding to the first interface: a description related to network requests (request); a network callback (network callback), i.e., a network callback for network requests; network capability parameters (network capabilities), e.g., extended netcat (netcat, NC) values; an application identifier (appUid), which is an automatically generated identifier for applications installed on the terminal device 300; an application package name (pkgName); an application signature (pkgSign); or, a TD parameter (td).

The second interface may be a newly defined interface. The routing relationship of the first application may be bound, i.e., a channel for switching the first application from a public network to a network slice corresponding to the first application. The routing relationship of the first application may further be understood as a relationship between the first application and the dedicated PDU session of the first application. To be specific, by binding the routing relationship of the first application, the data flow of the first application may be routed to and transmitted over the dedicated PDU session of the first application.

The second interface may alternatively be called through the following function: publicint bind AppUid To Network (intappUid, Network). When calling the second interface to bind the routing relationship of the first application, one or two of the following types of information may be inputted: an application identifier (appUid), which is an automatically generated identifier for applications installed on the terminal device 300; and a network (network), i.e., a network object, which refers to a dedicated slice network established for the first application.

It should be understood that the first interface may alternatively be referred to as a network slice initiation interface, and the second interface may alternatively be referred to as a routing relationship binding interface. This is not specifically limited in this application.

The package manager is configured to manage installation packages of various applications installed on the terminal device, such as installation packages of music, video, navigation, and other applications.

The activity manager is configured to manage and maintain information about all running activities in the operating system such as tasks, memory, services, and applications, and provide interfaces for obtaining activity information, and is further responsible for application launching.

The telephony manager (telephony manager) is configured to provide call functions of the terminal, such as management of call states (including connection, disconnection, etc.). The application framework layer may further include an RIL (Radio Interface Layer, radio interface layer). The modem (Modem) may exchange information with the telephony manager through the RIL.

The information management module may transmit the application information or the TD parameter of the first application from the second application to the Modem through the RIL. In addition, the Modem may transmit information indicating the success or failure of the matching between the first application and the network slice to the information management module through the RIL. The information management module then transmits the information indicating the success or failure of the matching between the first application and the network slice to the second application.

The Modem may include an NAS (Non-Access Stratum, non-access stratum) layer, an RRC (radio resource control, radio resource control) layer, a packet data convergence protocol (Packet Data Convergence Protocol, PDCP) layer, a radio link control (Radio Link Control, RLC) layer, a medium access control (Medium Access Control Layer, MAC) layer, and a physical (Physical, PHY) layer. Each of the foregoing layers may be a software module. The Modem may interact with a base station through an antenna.

It should be understood that the names of the software modules or layer structures included in the software structure illustrated in FIG. 3 according to embodiments of this application do not specifically limit the terminal device 300.

In other embodiments of this application, the software modules in the software structure illustrated in FIG. 3 may alternatively have other names. For example, the system libraries may alternatively be referred to as a C++ framework layer. The application framework layer (FWK) may alternatively be referred to as a Java framework layer. The information management module may alternatively be referred to as an OS module. The second application may alternatively be referred to as an SDK application, a first SDK, a first SDK application, etc.

It should also be understood that the software structure illustrated in FIG. 3 according to embodiments of this application does not specifically limit the terminal device 300. In other embodiments of this application, the terminal device 300 may include more or fewer software modules than those illustrated. For example, the system server may further include a resource manager, etc.

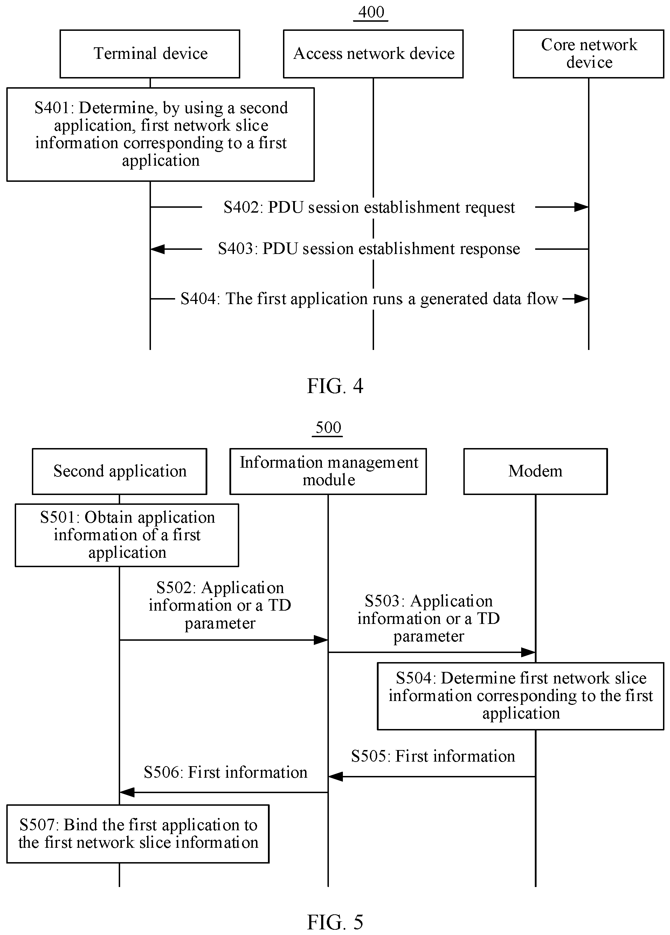

With reference to FIG. 4 and FIG. 5, the data transmission method of this application is described below in detail from the perspective of device interaction, taking a terminal device, an access network device, and a core network device as execution entities. The specific form and quantity of the devices shown are merely examples, and shall not constitute any limitation on the implementation of the method provided by this application.

It should be understood that the terminal device may be a terminal device body, a chip, a chip system or a processor that supports the terminal device to implement the data transmission method, or a logical module or software that can implement all or part of the functions of the terminal device. The access network device may be an access network device body, a chip, a chip system or a processor that supports the access network device to implement the data transmission method, or a logical module or software that can implement all or part of the functions of the access network device. The core network device may be a core network device body, a chip, a chip system or a processor that supports the core network device to implement the data transmission method, or a logical module or software that can implement all or part of the functions of the core network device. This is not specifically limited in this application.

FIG. 4 is a schematic flowchart of a data transmission method 400 according to an embodiment of this application. The method 400 may be applied to a system 100. A software structure of a terminal device may be shown in FIG. 3. As shown in FIG. 4, the method 400 includes the following steps:

S401: A terminal device determines, when a first application runs, first network slice information corresponding to the first application by using a second application.

It should be understood that when the first application runs, the first application may be launched. To be specific, when the first application is launched, the terminal device determines the first network slice information. Alternatively, time when the first application runs may be any moment after the first application is launched. To be specific, the terminal device determines the first network slice information during the running process of the first application. This is not specifically limited in this application.

The first network slice information may be understood as a parameter for describing a parameter required by the terminal device for activating a PDU session corresponding to the first network slice information or a parameter for describing an attribute of the PDU session corresponding to the first network slice information. Network slice information corresponding to different types of applications determined by the terminal device may be different. For example, a game application determined by the terminal device corresponds to network slice information A, and a shopping application determined by the terminal device corresponds to network slice information B.

S402: The terminal device sends a PDU session establishment request to a core network device through an access network device. The PDU session establishment request carries the first network slice information. Correspondingly, the core network device receives the PDU session establishment request.

It should be understood that by carrying the first network slice information in the PDU session establishment request, the core network device may activate a PDU session according to the first network slice information. This PDU session may be understood as a dedicated PDU session for transmitting a data flow generated by running the first application.

S403: The core network device sends a PDU session establishment response to the terminal device through the access network device. The PDU session establishment response is configured for indicating that a PDU session is successfully established.

S402 and S403 may be understood as the process for activating the PDU session by using the first network slice information.

In some possible implementations, S402 and S403 are optional steps. To be specific, the PDU session may be a PDU session that has been activated before the terminal device determines the first network slice information. Alternatively, the PDU session may be activated in other manners. This is not specifically limited in this application.

S404: The terminal device sends a data flow generated by running the first application to the core network device by using a PDU session through the access network device. Correspondingly, the core network device receives the data flow.

It should be understood that in S402 to S404, the terminal device may interact with the core network device by using a Modem. For example, the terminal device sends the PDU session establishment request or the data flow to the terminal device by using the Modem through the access network device. Alternatively, the terminal device receives the PDU session establishment response by using the Modem.

It should be noted that in S402 to S404, the access network device may play a transparent transmission or forwarding role in the interaction process between the terminal device and the core network device. For brevity, the process in which the access network device receives and forwards information from the terminal device or the core network device is not described in embodiments of this application.

Optionally, before S401, after establishing a connection to the access network device, the terminal device may send a registration request to the access network device, to request to obtain a URSP. The registration request may be transmitted to the core network device via the access network device, and the core network device sends the URSP to the terminal device through the access network device.

In the data transmission method of this application, the terminal device may determine, by using the second application, the first network slice information corresponding to the running first application, so that the terminal device may transmit, by using the PDU session corresponding to the first network slice information, the data flow generated by running the first application. In this way, for different applications running in the terminal device, a PDU session corresponding to each application may be used to transmit a data flow generated by running each application, so that differentiated requirements for different applications can be satisfied, helping to improve the utilization rate of network resources, thereby improving user experience.

As an optional embodiment, for S401, the terminal device may determine the first network slice information by using the second application through the method 500 shown in FIG. 5.

FIG. 5 is a schematic flowchart of a method 500 for determining first network slice information by a terminal device according to an embodiment of this application. A software structure of the terminal device may be shown in FIG. 3. To be specific, the terminal device may include a first application, a second application, an information management module, and a Modem.

The method 500 includes the following steps:
S501: When a first application runs, a second application obtains application information of the running first application.

S502 to S504 below may be understood as an implementation in which the terminal device queries, based on the application information, a user equipment route selection policy URSP for first network slice information corresponding to the application information.

S502: The second application transmits the application information to an information management module.

S503: The information management module transmits the application information to a Modem.

Optionally, in embodiments of this application, the application information may include, but is not limited to, one or more of the following: an application ID, a package name, or a data network name (data network name, DNN).

S504: The Modem queries, based on the application information, a URSP for first network slice information corresponding to the application information. The URSP may include a corresponding relationship between the application information and the first network slice information.

Optionally, the terminal device may further bind a routing relationship of the first application through S505 to S507.

S505: The Modem transmits first information to the information management module, where the first information is configured for indicating that the first application is successfully matched with the first network slice information, and the first information includes information for indicating the first application.

The information for indicating the first application may be, for example, a name, an application identifier (appUid), or a package name of the first application. The first information may further include a first identifier. The first identifier represents that the application is successfully matched with the network slice information. For example, the first identifier may be 0, 1, true, or the like.

S506: The information management module of an OS module transmits the first information to the second application.

S507: The second application binds a routing relationship of the first application.

By enabling the first information to carry information for indicating the first application, the second application may determine that the first application is matched with a network slice successfully, so that the second application binds the routing relationship of the first application.

In some possible implementations, after S501, the method 500 may further include: The second application may replace the application information with a TD parameter based on a preset corresponding relationship, where the preset corresponding relationship includes a corresponding relationship between the application information and the TD parameter. In addition, the application information in S502 to S507 may be replaced with the TD parameter. The URSP may include a corresponding relationship between the TD parameter and the first network slice information.

For example, the URSP may include the TD parameter and the first network slice information, and there is a corresponding relationship between the TD parameter and the first network slice information.

The TD parameter is configured for describing an attribute of an application. The TD parameter may include, but is not limited to, one or more of the following: an application identifier (application identifier, App ID), a target internet protocol (internet protocol, IP) address, a target Port number (Port), a fully qualified domain name (fully qualified domain name, FQDN) of an access target, a DNN, or the like.

The network slice information may alternatively be referred to as a route selection descriptor (route selection descriptor), is configured for describing a parameter required by the terminal device for activating a PDU session corresponding to the network slice, and may include, but is not limited to, one or more of the following parameters: a DNN, network slice selection assistance information (network slice selection assistance information, NSSAI), and a data transmission protocol type. The protocol type may be a transmission control protocol (transmission control protocol, TCP), a user datagram protocol (user datagram protocol, UDP), or the like.

It should be noted that the URSP including the corresponding relationship between the application information and the first network slice information does not mean that the URSP necessarily includes the application information and the first network slice information, but the URSP includes information for indicating the application information and information for indicating the first network slice information, and there is a corresponding relationship between the information for indicating the application information and the information for indicating the first network slice information.

In addition, the URSP includes the corresponding relationship between the TD parameter and the first network slice information does not mean that the URSP necessarily includes the TD parameter and the first network slice information, but the URSP includes information for indicating the TD parameter and information for indicating the first network slice information, and there is a corresponding relationship between the information for indicating the TD parameter and the information for indicating the first network slice information.

For example, as shown in the following Table 1, the URSP may include, but is not limited to, a rule priority field, an application descriptor field, an IP descriptor field, a domain descriptor field, a non-IP descriptor field, a data network name field, a connection capability field, and the like.

**Table 1**

| Information name | Description | Category | PCF allowed to be modified in UE context | Range |
|---|---|---|---|---|
| Rule priority | Determine an execution sequence of a URSP in UE | Mandatory | Yes | UE context |
| TD parameter | Define a traffic descriptor component in a URSP, and indicate priorities of one or more obtaining approaches of a traffic descriptor | Mandatory | | |
| Application descriptor | Composed of an OS ID and an OS APP ID | Optional | Yes | UE context |
| IP descriptor | Destination IP triplet (an IP address or an IPv6 network prefix, a port number, and a protocol ID of an IP protocol) | Optional | Yes | UE context |
| Domain descriptor | FQDN or regular expression as a domain name matching condition | Optional | Yes | UE context |
| Non-IP descriptor | Descriptor of non-IP traffic destination information | Optional | Yes | UE context |
| DNN | Matched with DNN information provided by an application | Optional | Yes | UE context |
| Connection capability | Matched with information provided by a UE application when requesting a network connection with a specific function | Optional | Yes | UE context |

By way of example, the terminal device may match the application information with the URSP rule in Table 1, to determine the first network slice information corresponding to the application information or the TD parameter.

That the application information is matched with the URSP means that the URSP includes the application information or information for indicating the application information.

As an example, the URSP includes a TD parameter, and the TD parameter corresponds to the application information. Alternatively, the information for indicating the application information is a "domain descriptor", and the URSP rule also includes the "domain descriptor". Therefore, the application information is matched with the URSP. The application information includes a value "1", and the URSP rule includes an "application descriptor". However, the value "1" included in the application information is related to the "application descriptor". For example, there is a mapping relationship between the value "1" and the "application descriptor". Therefore, the application information is matched with the URSP.

Optionally, the information for indicating the application information or the application information in the URSP is in a one-to-one correspondence with the first network slice information. When the application information is matched with the URSP, the terminal device may determine the first network slice information based on the information for indicating the application information in the URSP or the corresponding relationship between the application information and the first network slice information, and perform communication according to the PDU session corresponding to the first network slice information.

By way of example, the "application descriptor" in the URSP corresponds to network slice information 1. The "IP descriptor" in the URSP corresponds to network slice information 2. The "domain descriptor" in the URSP corresponds to network slice information 3. The "non-IP descriptor" in the URSP corresponds to network slice information 4. "Data network name" in the URSP corresponds to network slice information 5. The "connection capability" in the URSP rule corresponds to network slice information 6.

For example, the information for indicating the application information is a "domain descriptor", and the URSP also includes the "domain descriptor". Therefore, the application information is matched with the URSP. In this way, the terminal device determines, based on the corresponding relationship between the "domain descriptor" and network slice information 3, that the first network slice information is network slice information 3, and transmits a data flow according to the PDU session corresponding to network slice information 3.

As an optional embodiment, S502 may be implemented in the following manner: The second application calls a first interface to transmit the application information or the TD parameter to the information management module.

For the first interface, reference may be made to the foregoing descriptions, and details are not described herein again.

In embodiments of this application, the first interface may be configured to transmit application information or a TD parameter. The second application may transmit the application information or the TD parameter to the information management module by using the first interface, so that the Modem can match the network slice information for the first application based on the application information or the TD parameter from the information management module.

As an optional embodiment, S503 may be implemented in the following manner: The information management module transmits the application information or the TD parameter to the Modem by using a network request (network request) function.

The network request function is an existing function provided by the Android system, and may be configured for establishing a network session, a network connection, and the like.

In this way, the application information or the TD parameter can be transmitted to the Modem by using the existing function of the Android system without establishing a new function, so that the efficiency and success rate of transmitting the application information or the TD parameter to the Modem are relatively high.

As an optional embodiment, S507 may be implemented in the following manner: The second application binds the first application to the first network slice information through a second interface.

For the second interface, reference may be made to the foregoing descriptions. In this way, the routing relationship of the first application may be bound through the second application, so that the data flow generated by running the first application may be routed to the PDU session through the routing relationship. Then, the terminal device transmits the data flow of the first application by using the PDU session.

As an optional embodiment, S501 may be implemented in the following manner: The terminal device further includes a package manager and an activity manager. The activity manager determines to obtain the application information of the first application from the package manager by using a package name of the first application. The second application obtains the application information from the activity manager. To be specific, the second application may register a listener with the activity manager. Alternatively, the second application registers a listener with the package manager, and the package manager may transmit the application information of the first application to the second application. Alternatively, the second application may obtain the application information of the first application from the first application.

It should be understood that the package manager may be configured to manage an installation package of the first application and manage information for describing the installation package of the first application, for example, a name of the first application and an application identifier. The activity manager is configured to manage activities such as launching of the first application. For example, when the first application is launched, the activity manager may obtain a package name of the first application. It should be further understood that the terminal device may launch the first application in many manners.

In an example, the first application is launched based on an input operation of a user, for example, based on an operation of tapping an icon of the first application on a desktop. In this case, that the activity manager obtains the package name of the first application may be implemented in the following manner: The launcher indicates the package name of the first application to the activity manager.

In another example, when an application that can be configured to trigger to launch the first application launches the first application, for example, the first application is a payment application, and an application that can be configured to trigger to launch the first application is a music application, the user inputs a payment operation to the terminal device when using the music application, and the music application launches the payment application. In this case, obtaining the package name of the first application may be implemented in the following manner: The application that can be configured to trigger to launch the first application indicates the package name of the first application to the activity manager.

As an optional embodiment, before S501, the method 500 further includes: The second application obtains a system permission from the information management module, where the system permission is a permission for the second application to obtain the application information.

The system permission may alternatively be understood as a permission for the second application to register a listener with the activity management module for a launch process of an application and a permission for the second application to obtain application information of the launched application. In this way, the second application may successfully obtain the application information of the launched first application. Therefore, it is convenient for the terminal device to match the network slice information of the first application by using the application information.

In a possible implementation, that the second application obtains a system permission from the information management module may be implemented in the following manner: The second application sends a first request to the information management module, where the first request is configured for obtaining the system permission, and the first request carries a signature of the second application. The information management module determines, through the signature, whether the second application belongs to a whitelist. The second application obtains the system permission if the second application belongs to the whitelist.

The signature may be configured to determine information such as a source or a developer of the second application. The whitelist may be an application to which the information management module may grant a system permission (or trusted by the information management module), or a developer and/or a source of an application to which the information management module may grant a system permission (or trusted by the information management module). Therefore, through the signature, the information management module may determine whether to provide the system permission for the second application.

As an optional embodiment, the URSP is preset, obtained from a core network device, or generated through an attention (attention, AT) command.
1. The URSP may be preset in the terminal device. By way of example, the URSP may be a rule or a file confirmed by an operator, a terminal manufacturer, or a network device manufacturer. For example, in the method 500, if the second application transmits the application information to the Modem through the information management module, the URSP may be a rule or a file confirmed by the operator, the terminal manufacturer, or the network device manufacturer and including the application information and the network slice information. If the second application transmits the TD parameter to the Modem through the information management module, the URSP may be a rule or a file confirmed by the operator, the terminal manufacturer, or the network device manufacturer and including the TD parameter and the network slice information. In this way, when the terminal device matches the network slice information, the second application may transmit information such as the application information or the TD parameter to the Modem through the information management module, so that the terminal device has high flexibility in matching the network slice information.
2. The URSP may be obtained from the core network device. By way of example, after establishing a connection to the access network device, the terminal device may send a registration request to the access network device, to request to obtain the URSP. The registration request may be sequentially transmitted to a policy control network element via the access network device and a mobility management network element, and the policy control network element sequentially sends the URSP to the terminal device through the mobility management network element and the access network device.
3. The URSP is generated through an AT command. The URSP being generated through the AT command may alternatively be understood as a rule or a file modified through the AT command. The URSP file modified through the AT command may be, for example, a preconfigured_usrp_policy.xml file. For example, a corresponding relationship between a matching DNN and an NSSAI slice parameter or a corresponding relationship between a TD parameter and the NSSAI slice parameter may be modified through the AT command. In this way, the URSP may be modified according to a user requirement, so that the network slice information matched by the terminal device through the URSP can better meet the user requirement, thereby helping to improve user experience.

As an optional embodiment, the method 500 further includes: If the Modem fails to match the first application, the Modem transmits second information to the information management module, where the second information represents that the first application fails to match the network slice information, and the second information includes information for indicating the first application. The information management module transmits the second information to the second application.

Optionally, the second information further includes a second identifier, where the second identifier represents that the application fails to match the network slice information. The second identifier may be, for example, 0, 1, or false.

It should be understood that the failure of the Modem to match the first application may be, for example, that the application information and the information for indicating the application information are not found in the URSP, or that the network slice information corresponding to the application information is not found. Alternatively, the URSP does not find the TD parameter and the information for the TD parameter, or does not find the network slice information corresponding to the TD parameter.

It should be noted that in embodiments of this application, the information management module may alternatively be replaced with an OS module or an OS entity. Alternatively, the second application may be replaced with an SDK developed by an operator. This is not specifically limited in this application.

It should be understood that the sequence number of the methods does not mean the sequence of execution, the sequence of execution of each process should be determined by functions and internal logic.

It should be further noted that after the terminal device determines the first network slice information by using the Modem (S504), the terminal device may perform S505 to S507, as well as S402 and S403. To be specific, S505 to S507 may be performed in parallel with S402 and S403, or may be performed before or after S402 and S403. This is not specifically limited in this application.

It should be understood that in some possible implementations, the PDU session in embodiments of this application may be replaced with other sessions, such as a packet data network (packet data network, PDN) session. This is not specifically limited in this application.

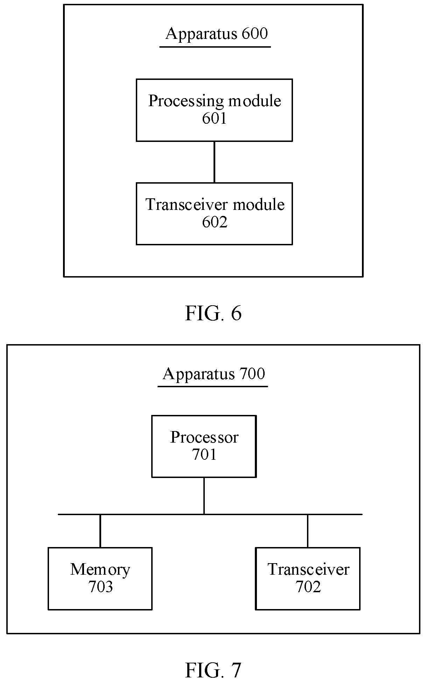

The data transmission method according to an embodiment of this application has been described in detail above with reference to FIG. 4 and FIG. 5. A data transmission apparatus according to an embodiment of this application will be described below in detail with reference to FIG. 6 to FIG. 8. The data transmission apparatus includes modules or units configured to execute the corresponding parts in the foregoing embodiments. The modules or units may be software, hardware, or a combination of software and hardware. Only a brief example of the data transmission apparatus is provided below. For details about the implementation details of the solution, reference may be made to the description of the foregoing method embodiments, and details are not described herein again.

FIG. 6 is a schematic block diagram of a data transmission apparatus 600 according to an embodiment of this application. As shown in FIG. 6, the apparatus 600 includes: a processing module 601 and a transceiver module 602.

The processing module 601 is configured to determine, when a first application runs, first network slice information corresponding to the first application by using a second application. The transceiver module 602 is configured to transmit, by using a protocol data unit PDU session activated through the first network slice information, a data flow generated by running the first application.

Optionally, the processing module 601 is specifically configured to: obtain application information of the first application by using the second application; and query, based on the application information, a user equipment route selection policy URSP for the first network slice information corresponding to the application information.

Optionally, the processing module 601 is specifically configured to: transmit the application information to an information management module of an operating system by using the second application; transmit the application information to a modem (Modem) by using the information management module; and query, by using the Modem based on the application information, the URSP for the first network slice information corresponding to the application information, where the URSP includes a corresponding relationship between the application information and the first network slice information.

Optionally, the specific configuration of the processing module 601 for transmitting the application information to an information management module by using the second application includes: calling, by using the second application, a first interface to transmit the application information to the information management module.

Optionally, the information management module transmits the application information to the Modem by using a network request function.

Optionally, the processing module 601 is specifically configured to: replace the application information with a traffic descriptor TD parameter by using the second application based on a preset corresponding relationship, where the preset corresponding relationship includes a corresponding relationship between the application information and the TD parameter; transmit the TD parameter to the information management module by using the second application; transmit the TD parameter to the modem (Modem) by using the information management module; and query, by using the Modem based on the TD parameter, the URSP for the first network slice information corresponding to the application information, where the URSP includes a corresponding relationship between the TD parameter and the first network slice information.

Optionally, the processing module 601 is further configured to: transmit first information to the information management module by using the Modem, where the first information is configured for indicating that the first application is successfully matched with the first network slice information, and the first information includes information for indicating the first application; transmit, by using the information management module, the first information to the second application; and call, by using the second application, a second interface to bind a routing relationship of the first application.

Optionally, the transceiver module 602 is specifically configured to: send, to the core network device by using the Modem, a PDU session establishment request for activating the PDU session, where the PDU session establishment request carries the first network slice information; receive a PDU session establishment response from the core network device, where the PDU session establishment response is configured for representing a successful activation of the PDU session; and transmit the data flow by using the Modem through the PDU session.

Optionally, the URSP is preset, obtained from a core network device, or generated through an attention AT command.

Optionally, the processing module 601 is further configured to: obtain a system permission from the information management module by using the second application, where the system permission is a permission for the second application to obtain the application information.

Optionally, the processing module 601 is specifically configured to: send a first request to the information management module by using the second application, where the first request is configured for obtaining the system permission, and the first request carries a signature of the second application; determine, by using the information management module through the signature, whether the second application belongs to a whitelist; and obtain, by the second application, the system permission if the second application belongs to the whitelist.

Optionally, the second application is a first SDK application, and/or the application information includes one or more of the following: an application number identifier ID, a package name, or a data network name DNN.

It should be understood that the apparatus 600 herein is embodied in a form of a functional module. The term "module" herein may refer to an application specific integrated circuit (application specific integrated circuit, ASIC), an electronic circuit, a processor (e.g., a shared processor, a dedicated processor, or a group processor) configured to execute one or more software or firmware programs, a memory, a combined logic circuit, and/or another suitable component that supports the described functions. In an optional example, a person skilled in the art may understand that the apparatus 600 may be specifically the terminal device in the foregoing embodiments, and the apparatus 600 may be configured to perform the processes and/or steps corresponding to the terminal device in the foregoing method embodiments. To avoid repetition, details are not described herein again.

The apparatus 600 has a function of implementing corresponding steps performed by the terminal device in the foregoing method. The foregoing function may be implemented by using hardware, or may be implemented by using hardware executing corresponding software. The hardware or the software includes one or more modules corresponding to the foregoing function.

In embodiments of this application, the apparatus 600 in FIG. 6 may alternatively be a chip, for example, an SOC or a Modem. Correspondingly, the processing module 601 may be a transceiver circuit of the chip. This is not limited herein.

FIG. 7 shows a schematic block diagram of a data transmission apparatus 700 according to an embodiment of this application. The apparatus 700 includes a processor 701, a transceiver 702, and a memory 703. The processor 701, the transceiver 702, and the memory 703 communicate with each other through an internal connection path. The memory 703 is configured to store instructions. The processor 701 is configured to execute the instructions stored in the memory 703, to control the transceiver 702 to send a signal and/or receive a signal.

It should be understood that the apparatus 700 may be specifically the terminal device in the foregoing embodiments, and may be configured to perform the steps and/or processes corresponding to the terminal device in the foregoing method embodiments. Optionally, the memory 703 may include a read-only memory and a random access memory, and provide instructions and data for the processor. A part of the memory may further include a non-volatile random access memory. For example, the memory may further store information about a device type. The processor 701 may be configured to execute the instructions stored in the memory, and when the processor 701 executes the instructions stored in the memory, the processor 701 is configured to perform the steps and/or processes of the foregoing method embodiments. The transceiver 702 may include a transmitter and a receiver. The transmitter may be configured to implement steps and/or processes corresponding to the foregoing transceiver for performing a sending action. The receiver may be configured to implement steps and/or processes corresponding to the foregoing transceiver for performing a receiving action.

It should be understood that in embodiments of this application, the processor may be a central processing unit (central processing unit, CPU), and the processor may alternatively be another general-purpose processor, a digital signal processor (DSP), an application specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, the steps of the foregoing method may be implemented by using a hardware integrated logic circuit in the processor or instructions in a form of software. The steps of the method disclosed in combination with embodiments of this application may be directly performed by a hardware processor, or may be performed through a combination of hardware and software modules in the processor. The software module may be stored in a storage medium that is mature in the art, such as a random access memory, a flash memory, a read-only memory, a programmable read-only memory, an electrically erasable programmable memory, or a register. The storage medium is located in the memory. The processor executes the instructions in the memory, and completes the steps of the foregoing method in combination with hardware thereof. To avoid repetition, details are not described herein again.

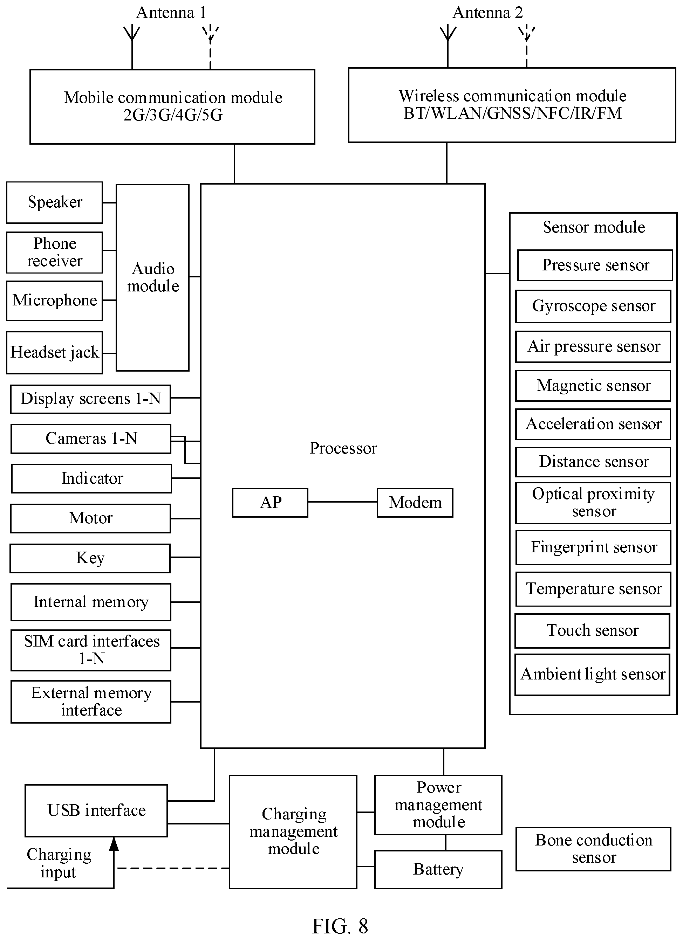

A hardware structure of a data transmission apparatus is shown in FIG. 8. The data transmission apparatus may be a terminal device. The data transmission apparatus may include a processor, an external memory interface, an internal memory, a universal serial bus (universal serial bus, USB) interface, a charging management module, a power management module, a battery, antenna 1, antenna 2, a mobile communication module, a wireless communication module, a sensor module, a key, a motor, an indicator, a camera, a display screen, an SIM card slot, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It can be understood that the structure shown in embodiments of this application does not constitute a specific limitation on the terminal. In some other embodiments, the terminal may include more or fewer components than those shown in the figure, or some components may be combined, or some components may be split, or a different component deployment may be used. The components shown in the figure may be implemented by using hardware, software, or a combination of software and hardware.

The processor may include one or more processing units. For example, the processor may include an application processor (application processor, AP), a modem processor (Modem, which may alternatively be referred to as a baseband processor), a graphics processing unit (graphics processing unit, GPU), an image signal processor (image signal processor, ISP), a controller, a memory, a video codec, a digital signal processor (digital signal processor, DSP), and/or a neural-network processing unit (neural-network processing unit, NPU), and the like. Different processing units may be independent components, or may be integrated into one or more processors. The processor is a nerve center and a command center of the electronic device. The controller may generate an operating control signal based on an instruction operation code and a sequence signal, to complete control of fetching and executing instructions.

A wireless communication function of the terminal may be implemented by using antenna 1, antenna 2, the mobile communication module, the wireless communication module, the Modem, and the like. In some embodiments, antenna 1 of the terminal is coupled to the mobile communication module, and antenna 2 is coupled to the wireless communication module, so that the terminal may communicate with a network side device and another terminal by using a wireless communication technology.

In addition, an operating system further runs on the foregoing components, for example, an iOS operating system, an Android open-source operating system, or a Windows operating system. The Android open-source operating system may be shown in FIG. 3.

Some embodiments of this application provide a chip system, applied to a terminal. The chip system includes at least one processor and an interface. The interface is configured to receive instructions and transmit the instructions to the at least one processor. The at least one processor runs the instructions, so that the terminal performs the foregoing paging message processing method. The chip system may be a Modem or a system on chip (system on chip, Soc) including a Modem. The foregoing method may be implemented by the Modem or the like.

This application further provides a computer-readable storage medium. The computer-readable storage medium is configured to store a computer program, and the computer program configured for implementing the method in the foregoing method embodiments.

This application further provides a computer program product. The computer program product includes a computer program (which may also be referred to as code or an instruction). When the computer program runs on a computer, the computer may perform the method in the foregoing method embodiments.

A person of ordinary skill in the art may be aware that in combination with the examples described in embodiments disclosed in this specification, modules and algorithm steps can be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but it shall not be considered that the implementation goes beyond the scope of this application.

Those skilled in the art are able to clearly understand that for easy and concise description, the specific working processes of the system, apparatus, and module described previously may refer to the corresponding processes in the method embodiment, and are not described herein.

In the several embodiments provided in this application, it should be understood that the disclosed system, apparatus, and method may be implemented in other manners. For example, the apparatus embodiment described above is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one place, or may be distributed on a plurality of network modules. Some or all of the modules may be selected according to actual needs to achieve the objectives of the solutions of the embodiments.

In addition, functional modules in embodiments of this application may be integrated into one processing module, or each module may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or the part contributing to the related technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A data transmission method, wherein the method comprises:
determining, when a first application runs, first network slice information corresponding to the first application by using a second application; and
transmitting, by using a protocol data unit PDU session activated through the first network slice information, a data flow generated by running the first application.

2. The method according to claim 1, wherein the determining first network slice information corresponding to the first application by using a second application comprises:
obtaining application information of the first application by using the second application; and
querying, based on the application information, a user equipment route selection policy URSP for the first network slice information corresponding to the application information.

3. The method according to claim 2, wherein the querying, based on the application information, a user equipment route selection policy URSP for the first network slice information corresponding to the application information comprises:
transmitting the application information to an information management module of an operating system by using the second application;
transmitting the application information to a modem by using the information management module; and
querying, by using the modem based on the application information, the URSP for the first network slice information corresponding to the application information, wherein the URSP comprises a corresponding relationship between the application information and the first network slice information.

4. The method according to claim 3, wherein the transmitting the application information to an information management module by using the second application comprises:
calling, by using the second application, a first interface to transmit the application information to the information management module.

5. The method according to claim 3 or 4, wherein the information management module transmits the application information to the modem by using a network request function.

6. The method according to claim 2, wherein the querying, based on the application information, a user equipment route selection policy URSP for the first network slice information corresponding to the application information comprises:
replacing the application information with a traffic descriptor TD parameter by using the second application based on a preset corresponding relationship, wherein the preset corresponding relationship comprises a corresponding relationship between the application information and the TD parameter;
transmitting the TD parameter to the information management module by using the second application;
transmitting the TD parameter to the modem by using the information management module; and
querying, by using the modem based on the TD parameter, the URSP for the first network slice information corresponding to the application information, wherein the URSP comprises a corresponding relationship between the TD parameter and the first network slice information.

7. The method according to any one of claims 3 to 6, wherein the method further comprises:
transmitting first information to the information management module by using the modem, wherein the first information is configured for indicating that the first application is successfully matched with the first network slice information, and the first information comprises information for indicating the first application;
transmitting, by using the information management module, the first information to the second application; and
calling, by using the second application, a second interface to bind a routing relationship of the first application, wherein the routing relationship is a relationship between the first application and the PDU session.

8. The method according to any one of claims 3 to 7, wherein the transmitting, by using a protocol data unit PDU session activated through the first network slice information, a data flow generated by running the first application comprises:
sending, to a core network device by using the modem, a PDU session establishment request for activating the PDU session, wherein the PDU session establishment request carries the first network slice information;
receiving a PDU session establishment response from the core network device, wherein the PDU session establishment response is configured for representing a successful activation of the PDU session; and
transmitting the data flow by using the modem through the PDU session.

9. The method according to any one of claims 2 to 8, wherein the URSP is preset, obtained from a core network device, or generated through an attention AT command.

10. The method according to any one of claims 2 to 9, wherein before the obtaining application information of the first application by using the second application, the method further comprises:
obtaining a system permission from the information management module by using the second application, wherein the system permission is a permission for the second application to obtain the application information.

11. The method according to claim 10, wherein the obtaining a system permission from the information management module by using the second application comprises:
sending a first request to the information management module by using the second application, wherein the first request is configured for obtaining the system permission, and the first request carries a signature of the second application;
determining, by using the information management module through the signature, whether the second application belongs to a whitelist; and
obtaining, by the second application, the system permission if the second application belongs to the whitelist.

12. The method according to any one of claims 1 to 11, wherein the second application is a first SDK application, and/or the application information comprises one or more of the following: an application number identifier ID, a package name, or a data network name DNN.

13. A data transmission apparatus, comprising a module for performing the method according to any one of claims 1 to 12.

14. A data transmission apparatus, comprising: a processor, wherein the processor is coupled to a memory, the memory is configured to store a computer program, and when the processor calls the computer program, the apparatus performs the method according to any one of claims 1 to 12.

15. A computer-readable storage medium, configured to store a computer program, wherein the computer program comprises instructions for implementing the method according to any one of claims 1 to 12.

16. A chip system, comprising at least one processor and a communication interface, wherein the communication interface and the at least one processor are interconnected via a circuit, and the at least one processor is configured to run a computer program or instructions to perform the method according to any one of claims 1 to 12.

17. A computer program product, wherein the computer program product comprises a computer program code, and when the computer program code is run on a computer, the computer implements the method according to any one of claims 1 to 12.
